# EUROPEAN PATENT APPLICATION

(11) **EP 4 459 692 A1**
(43) Date of publication of application: **06.11.2024**
(21) Application number: 22915463.8
(22) Date of filing: 17.10.2022
(51) Int. Cl.: H01M 4/13, H01M 4/02, H01M 4/131, H01M 4/139, H01M 4/62

(54) **SECONDARY BATTERY ELECTRODE, METHOD FOR MANUFACTURING SECONDARY BATTERY ELECTRODE, AND SECONDARY BATTERY**

(30) Priority: 27.12.2021 JP 2021211835
(71) Applicant: Panasonic Intellectual Property Management Co., Ltd., Osaka-shi, Osaka 540-6207 (JP)
(72) Inventor: ESAKI Shogo, Kadoma-shi, Osaka 571-0057 (JP); HIBINO Mitsuhiro, Kadoma-shi, Osaka 571-0057 (JP); NAKURA Kensuke, Kadoma-shi, Osaka 571-0057 (JP)
(74) Representative: Novagraaf International SA
(86) International application number: PCT/JP2022/038523
(87) International publication number: WO 2023/127228

(57) **Abstract**

Provided are: a secondary battery electrode in which elution of a metal component is suppressed; and a secondary battery using this electrode. This secondary battery comprises a positive electrode and a negative electrode. At least the positive electrode or the negative electrode includes a collector, and a composite layer disposed on a surface of the collector. The composite layer includes an electrode active material containing an elemental metal, a compound having a terminal CN group, an electroconductive material, a water-insoluble additive, and a water-soluble additive. The water-insoluble additive contains a polysaccharide.

## Description

### TECHNICAL FIELD

The present disclosure relates to an electrode for a secondary battery, a method for manufacturing an electrode for a secondary battery, and a secondary battery.

### BACKGROUND ART

Secondary batteries such as lithium-ion secondary batteries are used as a driving power source for a mobile information terminal such as a mobile phone and a laptop personal computer, and used as a driving power source for an electric vehicle (EV), a hybrid electric vehicle (HEV), and the like.

As a positive electrode active material of the lithium-ion secondary battery, a Li-containing transition metal oxide including transition metals such as nickel, cobalt, and manganese is used. As a negative electrode active material of the lithium-ion secondary battery, a carbon material and the like are typically used, but a metal-containing compound such as lithium titanate, and the like may also be used.

When the secondary battery is repeatedly charged and discharged, for example, the transition metal in the positive electrode active material may be eluted to precipitate on a negative electrode or precipitate on a separator between a positive electrode and the negative electrode. For example, when the metal-containing compound is used as the negative electrode active material, the metal in the metal-containing compound may also be eluted to precipitate on the negative electrode or precipitate on the separator. The elution of the metal component from the electrode active material including the metal element may deteriorate durability of the secondary battery. Here, the durability means durability in a safety aspect of the battery and durability of a performance aspect of the battery. Patent Literature 1 and Non Patent Literature 1 disclose that a polysaccharide added as a binder into a positive electrode traps the metal component.

### CITATION LIST

### PATENT LITERATURE

PATENT LITERATURE 1: Japanese Unexamined Patent Application Publication No. 2003-297343

### NON PATENT LITERATURE

NON PATENT LITERATURE 1: Shi-Gang Sun, Electrochimica Acta, 351, 136401 (2020)

### SUMMARY

The present inventors have made intensive investigation, and consequently found that only adding the polysaccharide into the electrode may fail to sufficiently inhibit the metal elution. In particular, charge and discharge at high voltage significantly exhibit the above tendency.

It is an advantage of the present disclosure to provide: an electrode for a secondary battery in which elution of metal components are inhibited; and a secondary battery using this electrode.

An electrode for a secondary battery of an aspect of the present disclosure comprises: a current collector; and a mixture layer provided on a surface of the current collector, wherein the mixture layer includes an electrode active material containing a metal element, a compound having a CN group at a terminal, a conductive agent, a water-insoluble additive, and a water-soluble additive, and the water-soluble additive includes a polysaccharide.

A method for manufacturing an electrode for a secondary battery of an aspect of the present disclosure includes: a step of kneading an electrode active material containing a metal element, a compound having a CN group at a terminal, a conductive agent, a water-insoluble additive, and a water-soluble additive in a non-aqueous solvent to prepare a paste; and a step of applying the paste on a surface of a current collector to form a mixture layer.

A secondary battery of an aspect of the present disclosure is an electrode for a secondary battery comprising: a positive electrode; and a negative electrode, wherein at least any one of the positive electrode and the negative electrode is the above electrode for a secondary battery.

According to the present disclosure, the elution of the metal component from the electrode may be inhibited in the secondary battery.

### BRIEF DESCRIPTION OF DRAWING

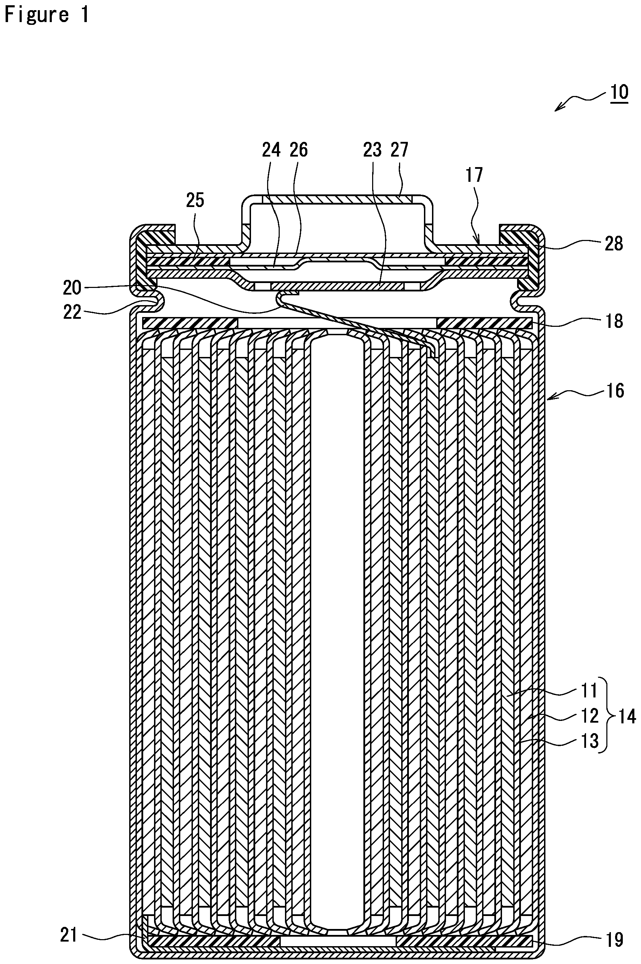

FIG. 1 is a sectional view of a secondary battery of an example of an embodiment.

### DESCRIPTION OF EMBODIMENTS

Hereinafter, an example of the embodiment of a secondary battery according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator interposed. The shape of the exterior is not limited to the cylindrical shape, and may be, for example, a rectangular shape, a coin shape, or the like. The exterior may be a pouch composed of laminated sheets including a metal layer and a resin layer. In the following description, specific shapes, materials, values, directions, and the like, which are examples for facilitating understanding of the present disclosure, may be appropriately modified with specifications of secondary batteries. When a plurality of embodiments and modified examples are included in the following description, use in appropriate combination of characteristic portions thereof are anticipated in advance. The description " a numerical value (A) to a numerical value (B)" herein means greater than or equal to the value (A) and less than or equal to the value (B).

FIG. 1 is a sectional view in a vertical direction of a cylindrical battery 10 of an example of an embodiment. In the cylindrical battery 10 illustrated in FIG. 1, an electrode assembly 14 and an electrolyte liquid (not illustrated) are housed in an exterior 16. Hereinafter, for convenience of description, a direction along an axial direction of the exterior 16 is described as "vertical direction or upper-lower direction", a sealing assembly 17 side is described as "upper side", and a bottom side of the exterior 16 is described as "lower side".

The electrolyte liquid may be an aqueous electrolyte liquid, but preferably a non-aqueous electrolyte liquid including a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen atom such as fluorine. For the electrolyte salt, a lithium salt such as LiPF₆ is used, for example. An amount of the dissolved electrolyte salt relative to the non-aqueous solvent is, for example, greater than or equal to 0.5 mol/L and less than or equal to 2.0 mol/L.

The electrode assembly 14 has a wound structure in which band-shaped positive electrode 11 and negative electrode 12 are wound via a separator 13. The positive electrode 11, the negative electrode 12, and the separator 13 are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than the positive electrode 11 and the negative electrode 12, and disposed to sandwich the positive electrode 11. A positive electrode lead 20 is connected to a substantial center in the longitudinal direction of the positive electrode 11 by welding or the like, and a negative electrode lead 21 is connected to an outer winding end of the negative electrode 12 by welding or the like.

For the separator 13, a porous sheet having an ion permeation property and an insulation property is used, for example. Specific examples of the porous sheet include a fine porous thin film, a woven fabric, and a nonwoven fabric. As a material for the separator 13, a polyolefin such as polyethylene and polypropylene, cellulose, and the like are suitable. The separator 13 may have any of a single-layered structure and a stacked structure. On a surface of the separator, a high heat-resistant layer may be formed.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior 16. The positive electrode lead 20 is connected to a lower surface of a filter 23 of the sealing assembly 17 by welding or the like, and a cap 27, which is a top plate of the sealing assembly 17 electrically connected to the filter 23, becomes a positive electrode terminal. The negative electrode lead 21 is connected to a bottom inner surface of the exterior 16 by welding or the like, and the exterior 16 becomes a negative electrode terminal.

The exterior 16 is a bottomed cylindrical metallic container having an opening on one side in an axial direction, as noted above. A gasket 28 is provided between the exterior 16 and the sealing assembly 17, thereby sealability inside the battery and insulation between the exterior 16 and the sealing assembly 17 are ensured. On the exterior 16, a grooved portion 22 in which a part of a side wall thereof projects inward to support the sealing assembly 17 is formed. The grooved portion 22 is preferably formed in a circular shape along a circumferential direction of the exterior 16, and supports the sealing assembly 17 with the upper face thereof. The sealing assembly 17 is fixed on the upper part of the exterior 16 with the grooved portion 22 and with an end part of the opening of the exterior 16 caulked to the sealing assembly 17.

The sealing assembly 17 has a stacked structure of the filter 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the electrode for a secondary battery according to the present embodiment will be described. The electrode for a secondary battery according to the present embodiment is applied for at least one of the positive electrode 11 and the negative electrode 12. The electrode for a secondary battery is for charge at a high voltage of, for example, greater than or equal to 4.3 V. Since the charge and discharge at high voltage tend to elute a metal component from the electrode, the effect of inhibiting the metal elution becomes remarkable.

The electrode for a secondary battery has a current collector and a mixture layer provided on the current collector. When the electrode for a secondary battery is applied for the positive electrode 11, the current collector is a positive electrode current collector such as a foil of a metal stable within a potential range of the positive electrode 11, such as aluminum, and a film in which such a metal is disposed on a surface layer, for example. When the electrode for a secondary battery is applied for the negative electrode 12, the current collector is a negative electrode current collector such as a foil of a metal stable within a potential range of the negative electrode 12, such as copper, and a film in which such a metal is disposed on a surface layer, for example.

The mixture layer of the electrode for a secondary battery includes an electrode active material containing a metal element, a compound having a CN group at a terminal, a conductive agent, a water-insoluble additive, and a water-soluble additive.

When the electrode for a secondary battery is applied for the positive electrode 11, for the electrode active material (namely, the positive electrode active material) containing a metal element constituting the mixture layer (namely a positive electrode mixture layer), a Li-containing transition metal oxide and the like are used, for example. Examples of the metal element contained in the Li-containing transition metal oxide include Ni, Co, Mn, Al, B, Mg, Ti, V, Cr, Fe, Cu, Zn, Ga, Sr, Zr, Nb, In, Sn, Ta, and W.

The Li-containing transition metal oxide preferably contains at least one of Ni and Mn. Examples of the Li-containing transition metal oxide include: an NiMn type containing Ni and Mn; an NCA type containing Ni, Co, and Al; an NCM type containing Ni, Co, and Mn; and lithium manganate having a spinel structure.

When the electrode for a secondary battery is applied for the negative electrode 12, examples of an electrode active material (namely, a negative electrode active material) containing a metal element constituting the mixture layer (namely a negative electrode mixture layer) include a Li-containing metal oxide such as lithium titanate (such as Li₄Ti₅O₁₂) and a Li-containing nitride such as lithium cobalt nitride, lithium iron nitride, and lithium manganese nitride. When a negative electrode active material containing no metal element is used as the negative electrode active material, almost no metal elution from the negative electrode active material is considered, and thereby the electrode for a secondary battery according to the present embodiment needs not to be applied for the negative electrode 12. Examples of the negative electrode active material including no metal element include carbon materials such as artificial graphite, natural graphite, hard carbon, soft carbon, carbon nanotube, and active carbon.

A structure of the compound having a CN group at a terminal is not particularly limited other than having the CN group at a terminal, but the compound preferably has CN groups at all terminals. The compound having a CN group at a terminal may trap the metal component eluted from the electrode active material due to repeated charge and discharge of the secondary battery. In addition, the mixture layer including the compound having a CN group at a terminal improves a first charge capacity and a first discharge capacity. This is presumably because the CN group is negatively charged to facilitate lithium ions to move in the mixture layer or on an interface between the mixture layer and the electrolyte liquid.

The compound having a CN group at a terminal preferably includes at least one of adiponitrile, pimelonitrile, and hexanetricarbonitrile, and particularly preferably includes adiponitrile.

Adiponitrile is represented by the following structural formula.

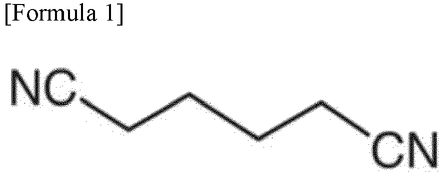

Pimelonitrile is represented by the following structural formula.

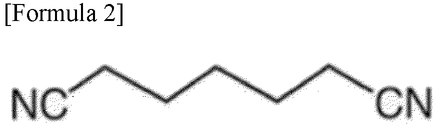

Hexanetricarbonitrile is represented by the following structural formula.

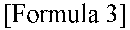

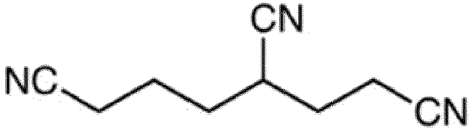

The water-insoluble additive includes, for example, a water-insoluble binder used for binding particles of the active material, the conductive agent, and the like, for adhering to the mixture layer and the current collector, and the like. Examples of the water-insoluble binder include a fluorine-based resin such as polytetrafluoroethylene (PTFE) and polyvinylidene fluoride (PVdF), polyacrylonitrile (PAN), a polyimide, an acrylic resin, and a polyolefin. The water-insoluble binder is preferably the fluorine-based resin in terms of a binding property and the like, and more preferably polyvinylidene fluoride (PVdF). Examples of the water-insoluble additive include a filler, in addition to the water-insoluble binder.

The water-soluble additive includes a polysaccharide. The polysaccharide may trap the metal component eluted from the electrode active material due to repeated charge and discharge of the secondary battery. Examples of the polysaccharide include: polysaccharides having a carboxyl group such as gum arabic, xanthan gum, carboxymethylcellulose, and pectin; polysaccharides having a sulfone group such as carrageenan; and guar gum, tamarind seed gum, Locust bean gum, pullulan, psyllium, hyaluronic acid, and chitosan. Among these polysaccharides, the polysaccharides having a carboxyl group is preferable in terms of, for example, high trapping ability of the metal component eluted from the electrode active material and the like, and gum arabic is particularly preferable.

Gum arabic (GA) is represented by the following structural formula.

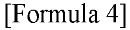

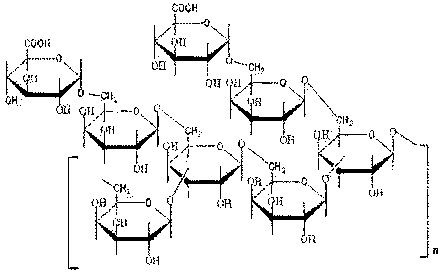

Xanthan gum (XG) is composed of repeating units of two glucose molecules, two mannose molecules, and gluconic acid, and represented by the following structural formula.

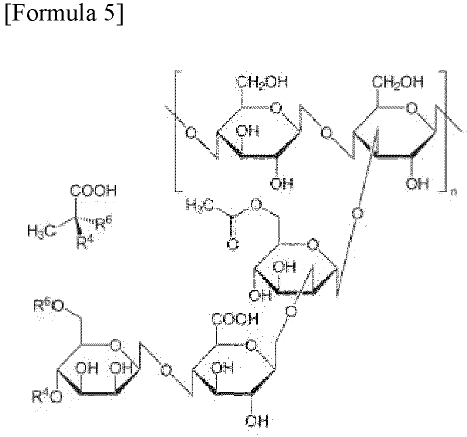

Examples of carboxymethylcellulose (CMC) include an ammonium-salt-type carboxymethylcellulose, and is represented by the following structural formula.

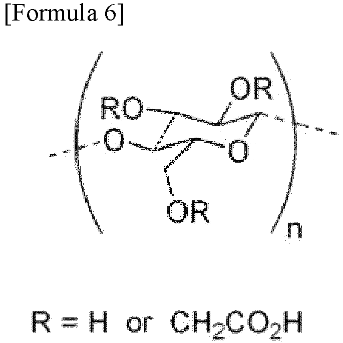

An amount of the polysaccharide included in the mixture layer is preferably greater than or equal to 0.1 mass% and less than or equal to 2 mass%, and more preferably greater than or equal to 0.1 mass% and less than or equal to 1 mass% relative to a mass of the electrode active material included in the mixture layer in terms of, for example, more inhibiting the elution of the metal component from the electrode.

Examples of the conductive agent included in the mixture layer include carbon materials such as carbon black, acetylene black, Ketjenblack, graphite, and carbon nanotube.

An example of the method for manufacturing an electrode for a secondary battery will be described. The method for manufacturing an electrode for a secondary battery comprises: a first step of kneading an electrode active material containing a metal element, a compound having a CN group at a terminal, a conductive agent, a water-insoluble additive, and a water-soluble additive in a non-aqueous solvent to prepare a paste; and a second step of applying the paste on a current collector to form a mixture layer. It has been conventionally known that a polysaccharide is dissolved in an aqueous solvent to use the polysaccharide as a binder. However, when the polysaccharide is not dissolved in an aqueous solution but added and mixed in the non-aqueous solvent, as the present embodiment, it is considered that the polysaccharide does not function as a binder. Although the compound having a CN group at a terminal is preferably added in the first step of preparing the paste, the compound having a CN group at a terminal may be added in a step of manufacturing the secondary battery other than the first step. For example, the compound having a CN group at a terminal may be added into the electrolyte liquid.

Examples of the non-aqueous solvent used for obtaining the paste include N-methyl-2-pyrrolidone (NMP). The raw materials for obtaining the paste are kneaded with, for example, a cutter mill, a pin mill, a bead mill, a fine-particle composer (an apparatus generating a shearing force between: a rotor having a special shape and rotating at a high speed in a tank; and a collision plate), a granulator, and a kneader such as a twin-screw extrusion kneader and a planetary mixer.

For applying the paste, a slit die coater, a reverse roll coater, a lip coater, a blade coater, a knife coater, a gravure coater, a dip coater, or the like are used, for example.

In the second step, the paste is applied on the current collector, and then the mixture layer is preferably heated and dried. The mixture layer is preferably rolled with a roller and the like. The mixture layer is rolled by using a roll-pressing machine or the like.

### EXAMPLES

Hereinafter, the present disclosure will be further described with Examples, but the present disclosure is not limited to these Examples.

### <Example 1>

### [Production of Positive Electrode]

In N-methyl-2-pyrrolidone (NMP), a Li-containing transition metal oxide represented by LiNi_{0.5}Mn_{0.5}O₂, acetylene black, polyvinylidene fluoride, gum arabic (GA), and adiponitrile were kneaded so that a mass ratio thereof was 92:5:3:0.5:0.5 to prepare a positive electrode paste. This positive electrode paste was applied on aluminum foil, the applied film was dried, and then the applied film was rolled with a roller to produce a positive electrode in which a positive electrode mixture layer was formed on the positive electrode current collector.

### [Preparation of Non-Aqueous Electrolyte Liquid]

Into a mixed solvent in which fluoroethylene carbonate (FEC) and methyl 3,3,3-trifluoropropionate (FMP) were mixed at a volume ratio of 1:3, LiPF₆ was dissolved at a concentration of 1 mol/L to prepare a non-aqueous electrolyte liquid.

### [Production of Test Cell]

An electrode assembly in which the positive electrode and a negative electrode being lithium metal were stacked opposite to each other via a separator, and the above non-aqueous electrolyte liquid were housed in a coin-shaped case body, and an opening of the coin-shaped case body was sealed with a gasket and a sealing assembly to produce a test cell.

### [Charge-Discharge Cycle Test]

Under a condition at 25°C, the above test cell was charged at a constant current of 0.1 C until 4.7 V, and then charged at a constant voltage of 4.7 V until a current value reached 0.05 C. After a rest for 20 minutes, the test cell was discharged at a constant current of 0.1 C until 2.5 V, and rested for 20 minutes. This charge and discharge (hereinafter, referred to as "0.1-C charge and discharge") was performed with one cycle. Then, the test cell was charged at a constant current of 0.2 C until 4.7 V, and then charged at a constant voltage of 4.7 V until a current value reached 0.1 C. After a rest for 20 minutes, the test cell was discharged at a constant current of 0.2 C until 2.5 V, and rested for 20 minutes. This charge and discharge (hereinafter, referred to as "0.2-C charge and discharge") was performed with 25 cycles. Then, the 0.1-C charge and discharge was performed with one cycle, the 0.2-C charge and discharge was performed with 25 cycles, and finally, the 0.1-C charge and discharge was performed with one cycle. A total number of charge-discharge cycles was 53.

### [Measurement of Amount of Eluted Metal]

The test cell after the charge-discharge cycle test was disassembled, and the negative electrode and the separator were taken out and dissolved in HCl. With the dissolved HCl solution, an amount of the transition metals was measured by inductively coupled plasma (ICP-OES analyzer manufactured by Thermo Fisher Scientific Inc., iCAP7400ICP-OES) measurement to specify the amount as an amount of eluted metal from the positive electrode active material. In addition, a charge capacity and a discharge capacity at the first time of the above charge-discharge cycle (0.1-C charge and discharge) were measured.

### <Example 2>

A test cell was produced and measured in the same manner as in Example 1 except that, in the production of the positive electrode, adiponitrile was changed to hexanetricarbonitrile.

### <Example 3>

A test cell was produced and measured in the same manner as in Example 1 except that, in the production of the positive electrode, adiponitrile was changed to pimelonitrile.

### <Example 4>

A test cell was produced and measured in the same manner as in Example 1 except that, in the production of the positive electrode, the mass ratio of the Li-containing transition metal oxide represented by LiNi_{0.5}Mn_{0.5}O₂:acetylene black:polyvinylidene fluoride:gum arabic (GA):adiponitrile was changed to 92:5:3:1:2.

### <Comparative Example 1>

A test cell was produced and measured in the same manner as in Example 1 except that, in the production of the positive electrode, gum arabic (GA) and adiponitrile were not added to prepare a positive electrode paste.

### <Comparative Example 2>

A test cell was produced and measured in the same manner as in Example 1 except that, in the production of the positive electrode, adiponitrile was not added to prepare a positive electrode paste.

### <Example 5>

A test cell was produced and measured in the same manner as in Example 1 except that: in the production of the positive electrode, LiNi_{0.8}Mn_{0.2}O₂ was used instead of LiNi_{0.5}Mn_{0.5}O₂; and in the charge-discharge cycle test, the voltage in charging was changed to 4.5 V.

### <Comparative Example 3>

A test cell was produced and measured in the same manner as in Example 5 except that, in the production of the positive electrode, gum arabic (GA) and adiponitrile were not added to prepare a positive electrode paste.

### <Comparative Example 4>

A test cell was produced and measured in the same manner as in Example 5 except that, in the production of the positive electrode, adiponitrile was not added to prepare a positive electrode paste.

### <Example 6>

A test cell was produced and measured in the same manner as in Example 1 except that: in the production of the positive electrode, LiNi_{0.5}Mn_{1.5}O₄ was used instead of LiNi_{0.5}Mn_{0.5}O₂; and in the charge-discharge cycle test, the voltage in charging was changed to 4.9 V and the voltage in discharging was changed to 3 V.

### <Comparative Example 5>

A test cell was produced and measured in the same manner as in Example 6 except that, in the production of the positive electrode, gum arabic (GA) and adiponitrile were not added to prepare a positive electrode paste.

Tables 1 to 3 show the measurement results on the test cells of Examples and Comparative Examples. The first charge-discharge efficiency is a value of the first discharge capacity divided by the first charge capacity. The amount of the eluted metal was not measured in Examples 2, 3, 4, and 6 and Comparative Example 5, but it was presumed that the amount of the eluted metal in Examples 2 to 4 was smaller than the amount of the eluted metal in Comparative Examples 1 and 2, and the amount of the eluted metal in Example 6 was smaller than the amount of the eluted metal in Comparative Example 5.

**[Table 1]**

| | Amount of eluted metal [µg] | | First charge capacity [mAhg⁻¹] | First discharge capacity [mAhg⁻¹] | First charge-discharge efficiency [%] |
|---|---|---|---|---|---|
| | Ni | Mn | | | |
| Example 1 | 800 | 200 | 255.1 | 223.9 | 87.8 |
| Example 2 | - | - | 250.8 | 223.7 | 89.2 |
| Example 3 | - | - | 252.7 | 224.2 | 88.7 |
| Example 4 | - | - | 254.7 | 226.5 | 88.9 |
| Comparative Example 1 | 4500 | 5800 | 247.7 | 218.4 | 88.2 |
| Comparative Example 2 | 880 | 280 | 250.3 | 218.3 | 87.2 |

**[Table 2]**

| | Amount of eluted metal [µg] | | First charge capacity [mAhg⁻¹] | First discharge capacity [mAhg⁻¹] | First charge-discharge efficiency [%] |
|---|---|---|---|---|---|
| | Ni | Mn | | | |
| Example 5 | 19 | 29 | 253.7 | 225.7 | 89.0 |
| Comparative Example 3 | 26 | 40 | 236.3 | 210.2 | 89.0 |
| Comparative Example 4 | 22 | 32 | 236.4 | 210.3 | 89.0 |

**[Table 3]**

| | First charge capacity [mAhg⁻¹] | First discharge capacity [mAhg⁻¹] | First charge-discharge efficiency [%] |
|---|---|---|---|
| Example 6 | 159.0 | 140.0 | 88.1 |
| Comparative Example 5 | 152.8 | 135.2 | 88.5 |

In Table 1, the test cell of Example 1 yields a small amount of the eluted metal compared with the test cells of Comparative Examples 1 and 2. In Table 2, the test cell of Example 5 yields a small amount of the eluted metal compared with the test cells of Comparative Examples 3 and 4. It is found from these results that the metal elution may be inhibited by adding both the polysaccharide and the compound having a CN group at a terminal into the mixture layer. In Tables 1 to 3, Examples have a large first charge capacity and the first discharge capacity compared with Comparative Examples. Therefore, it is found that the metal elution from the electrode may be inhibited and the first charge and discharge capacities may be increased by adding both the polysaccharide and the compound having a CN group at a terminal into the mixture layer.

### REFERENCE SIGNS LIST

10 Secondary battery, 11 Positive electrode, 12 Negative electrode, 13 Separator, 14 Electrode assembly, 16 Case body, 17 Sealing assembly, 18, 19 Insulating plate, 20 Positive electrode lead, 21 Negative electrode lead, 22 Projecting portion, 23 Filter, 24 Lower vent member, 25 Insulating member, 26 Upper vent member, 27 Cap, 28 Gasket

## Claims

1. An electrode for a secondary battery, comprising:
a current collector; and
a mixture layer provided on a surface of the current collector, wherein
the mixture layer includes an electrode active material containing a metal element, a compound having a CN group at a terminal, a conductive agent, a water-insoluble additive, and a water-soluble additive, and
the water-soluble additive includes a polysaccharide.

2. The electrode for a secondary battery according to claim 1, wherein the water-insoluble additive includes a fluorine-based resin.

3. The electrode for a secondary battery according to claim 2, wherein the fluorine-based resin includes polyvinylidene fluoride (PVdF).

4. The electrode for a secondary battery according to any one of claims 1 to 3, wherein an amount of the polysaccharide included in the mixture layer is greater than or equal to 0.1 mass% and less than or equal to 2 mass% relative to a mass of the electrode active material included in the mixture layer.

5. The electrode for a secondary battery according to claim 4, wherein the amount of the polysaccharide included in the mixture layer is greater than or equal to 0.1 mass% and less than or equal to 1 mass% relative to the mass of the electrode active material included in the mixture layer.

6. The electrode for a secondary battery according to any one of claims 1 to 5, wherein the polysaccharide has a carboxyl group.

7. The electrode for a secondary battery according to claim 6, wherein the polysaccharide includes gum arabic.

8. The electrode for a secondary battery according to any one of claims 1 to 7, wherein the compound having a CN group at a terminal includes at least one of hexanetricarbonitrile, pimelonitrile, and adiponitrile.

9. The electrode for a secondary battery according to claim 8, wherein the compound having a CN group at a terminal includes adiponitrile.

10. The electrode for a secondary battery according to any one of claims 1 to 8, wherein the electrode is for charge at a high voltage of greater than or equal to 4.3 V.

11. The electrode for a secondary battery according to any one of claims 1 to 9, wherein the electrode active material is a positive electrode active material.

12. The electrode for a secondary battery according to claim 11, wherein the positive electrode active material includes a Li-containing transition metal oxide containing at least any one of Ni and Mn.

13. A method for manufacturing an electrode for a secondary battery, the method including:
a step of kneading an electrode active material containing a metal element, a compound having a CN group at a terminal, a conductive agent, a water-insoluble additive, and a water-soluble additive in a non-aqueous solvent to prepare a paste; and
a step of applying the paste on a surface of a current collector to form a mixture layer.

14. A secondary battery, comprising:
a positive electrode; and
a negative electrode,
wherein at least any one of the positive electrode and the negative electrode is the electrode for a secondary battery according to any one of claims 1 to 10.

15. A secondary battery, comprising:
a positive electrode; and
a negative electrode,
wherein the positive electrode is the electrode for a secondary battery according to claim 11 or 12.
